# EUROPEAN PATENT SPECIFICATION

(11) **EP 3 231 600 B1**
(45) Date of publication and mention of the grant of the patent: **27.05.2020**
(21) Application number: 17166353.7
(22) Date of filing: 12.04.2017
(51) Int. Cl.: B22F 3/26, B22F 7/08, C23C 4/18, C23C 24/04, B23K 26/361, B32B 15/01, C23C 4/129, C23C 4/134, B23K 26/40, B22F 3/105, B23K 103/08, B23K 103/02

(54) **LIGHT WEIGHT COMPONENT WITH INTERNAL REINFORCEMENT AND METHOD OF MAKING**
LEICHTE KOMPONENTE MIT INNERER VERSTÄRKUNG UND VERFAHREN ZUR HERSTELLUNG
COMPOSANT LÉGER AYANT UN RENFORCEMENT INTERNE ET PROCÉDÉ DE FABRICATION

(30) Priority: 12.04.2016 US 201615096653
(43) Date of publication of application: 18.10.2017
(73) Proprietor: United Technologies Corporation, Farmington, CT 06032 (US)
(72) Inventor: ROBERGE, Gary D., Tolland, CT 06084 (US)
(74) Representative: Dehns

(56) References cited:
- EP-A1- 1 477 578
- WO-A1-2007/073592
- DE-A1-102011 078 674
- DE-B3-102005 004 695
- DE-C1- 19 526 057
- DE-U1-202004 018 594
- US-A1- 2006 285 975
- No Author ET AL: "Stabilität vereint Leichtigkeit AFS -Einstoff-Aluminium-Sandwich METALFOAM: WELTWEIT EINZIGARTIG Stabilität vereint Leichtigkeit AFS -Einstoff-Aluminium-Sandwich", , 4 March 2016 (2016-03-04), XP055390293, Retrieved from the Internet: URL:http://metalfoam.de/fileadmin/metalfoa m/PDF/metalfoam_Broschuere_AFS_04032016_DE _Web.pdf [retrieved on 2017-07-12]

## Description

### BACKGROUND

This disclosure relates generally to methods of making low-cost, light weight components and components formed by the aforementioned methods. In particular, the present application is directed to a component formed from a composite of metallic foam and an external metallic shell. In addition, various embodiments of the present disclosure are also directed to methods for making such a component.

Commercially suitable components need to meet specific performance criteria. However, while a component may meet certain performance criteria it may be at the cost of other desirable factors such as component weight, time to manufacture and cost to manufacture. For example, subtractive manufacturing or machining oversized blocks, materials or forgings until a desired final part shape is achieved may be one process. However, and in this process, the monolithic nature of the raw input material means that the final part weight is driven by the final volume of the part and density of material used.

Accordingly, it is desirable to provide low-cost, light weight components and components formed by such methods.

EP 1 477 578 A1 discloses a method for producing a metal foam, comprising the steps of providing an open cell core metal foam comprising a first metal or alloy, and coating the core metal foam with a second metal or alloy, which is applied onto the core metal foam in a liquid state.

DE 19526057 discloses a method for producing a composite structure from a metal foam and a thermally sprayed metal layer, wherein the surface of the metal foam substrate is compacted prior to thermal spraying with a heated pressing tool.

DE 202004018594 discloses a lightweight structure comprising at least two aluminium foam panels and a connecting element wherein the panels and connecting elements are welded together such that the panels are indirectly connected via the connecting element.

US 2006/0285975 discloses a turbine airfoil comprising a cavity and connected cooling passages and coated in a thermal barrier coating, wherein the cavity is filled with a porous material of low density such that heat can be passed from the metal to the air flowing through the pores.

DE 102011078674 discloses a cooling component comprising a cellular metal foam body formed between solid metal ribs, wherein the ribs and the foam body are connected via soldering.

DE 102005004695 discloses a heat sink formed using an open cell metal foam within a web of metal lamellae.

Accessed at http://metalfoam.de/fileadmin/metalfoam/PDF/metalfoam_Broschuere_AFS_04032016_DE_ Web.pdf, "Stabilität vereint Leichtigkeit AFS -Einstoff-Aluminium-Sandwich METALFOAM: WELTWEIT EINZIGARTIG Stabilität vereint Leichtigkeit AFS -Einstoff-Aluminium-Sandwich" discloses a three layered aluminium material wherein pore-like aluminium core is enveloped in an aluminium cover layer. BRIEF DESCRIPTION

A method of making a light weight component is provided comprising forming a first metallic foam core into a desired configuration smaller than the final dimensions of the light weight component either from a block of open or closed cell structured metallic foam by a machining process selected from the group comprising: milling; grinding; electrical discharge machining (EDM); water-jet; and laser machining, or from a sheet of open or closed cell structured metallic foam by a hot or cold forming process
wherein the metallic foam is placed in a die; forming a second metallic foam core into a desired configuration smaller than the final dimensions of the light weight component either from a block of open or closed cell structured metallic foam by a machining process selected from the group comprising: milling; grinding; electrical discharge machining (EDM); water-jet; and laser machining, or from a sheet of open or closed cell structured metallic foam by a hot or cold forming process wherein the metallic foam is placed in a die; applying an external metallic shell to an exterior surface of the first metallic foam core after it has been formed into the desired configuration to form a first structural member via an application process selected from the group comprising: flame spray application process; plasma spray application process; cold-spray application process; electron beam physical vapor deposition (EB/PVD); chemical vapor deposition; and electroplating application process; applying an external metallic shell to an exterior surface of the second metallic foam core after it has been formed into the desired configuration to form a second structural member via an application process selected from the group comprising: flame spray application process; plasma spray application process; cold-spray application process; electron beam physical vapor deposition (EB/PVD); chemical vapor deposition; and electroplating application process; arranging the first structural member to be adjacent to the second structural member to form a desired pre-form shape, wherein the applied external metallic shell located on the surface of the second metallic foam core of the second structural member, is adjacent to the external metallic shell applied to the exterior surface of the first metallic foam core of the first structural member such that a metallic rib is formed by the metallic shells of the first structural member and the second structural member; and applying an external metallic shell to an exterior surface of the desired pre-form shape via an application process selected from the group comprising: flame spray application process; plasma spray application process; cold-spray application process; electron beam physical vapor deposition (EB/PVD); chemical vapor deposition; and electroplating application process, wherein the metal of the metallic foam core is selected from the group comprising: titanium; colbalt; aluminum; nickel; steel alloys, magnesium, copper, molybdenum, niobium, tungsten, zinc alloys, titanium aluminide, nickel aluminide and molybdenum disilicide.

In addition to one or more of the features described above, or as an alternative to any of the foregoing embodiments, wherein the desired configuration is a hexagon.

In addition to one or more of the features described above, or as an alternative to any of the foregoing embodiments, wherein the desired configuration is a ring.

In addition to one or more of the features described above, or as an alternative to any of the foregoing embodiments, wherein the metallic foam core is an open cell structure and the applied external metallic shell defines a portion of a fluid conduit through the component.

In addition to one or more of the features described above, or as an alternative to any of the foregoing embodiments, wherein an inlet opening and an outlet opening are formed in the external metallic shell and the metallic foam core is an open cell structure and the applied external metallic shell defines a portion of a fluid conduit through the component via the inlet opening and the outlet opening.

In addition to one or more of the features described above, or as an alternative to any of the foregoing embodiments, wherein an interim coat is deposited on the exterior surface of the metallic foam core prior to the application of the external metallic shell.

In addition to one or more of the features described above, or as an alternative to any of the foregoing embodiments, wherein the interim coat is a ceramic based thermal barrier coating.

In addition to one or more of the features described above, or as an alternative to any of the foregoing embodiments, further including the step of: heat treating the metallic foam core after the external metallic shell has been applied to the exterior surface of the metallic foam core.

In addition to one or more of the features described above, or as an alternative to any of the foregoing embodiments, further including the step of: forming additional features in the metallic foam core after the external metallic shell has been applied to the exterior surface of the metallic foam core.

In addition to one or more of the features described above, or as an alternative to any of the foregoing embodiments, wherein the additional features are formed by a drilling process.

In addition to one or more of the features described above, or as an alternative to any of the foregoing embodiments, wherein a supplemental application of the external metallic outer shell is applied to the metallic foam core after the drilling process.

In addition to one or more of the features described above, or as an alternative to any of the foregoing embodiments, wherein a thickness of the external metallic outer shell varies in order to provide localized structural rigidity to the component.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a perspective view of an un-machined block of metallic foam;
FIG. 2 is a perspective view of a machined block of metallic foam;
FIG. 3 is a perspective view of an un-formed sheet of metallic foam;
FIG. 3A is a perspective view of the un-formed sheet of metallic foam placed in a die for forming the un-formed sheet of metallic foam;
FIG. 4 is a perspective view of a formed sheet of metallic foam;
FIG. 5 illustrates the application of an external metallic shell to the formed or machined metallic foam of FIGS. 2 or 4;
FIG. 6 illustrates the formed or machined metallic foam of FIGS. 2 or 4 with an applied external metallic shell;
FIG. 7 illustrates the formed or machined metallic foam of FIG. 6 with additional features formed therein;
FIG. 8 is a cross-sectional view of a portion of the formed or machined metallic foam of FIGS. 6 or 7;
FIG. 8A is an enlarged cross-sectional view of a portion of the formed or machined metallic foam of FIGS. 6 or 7;
FIGS. 9 and 10 are non-limiting examples of components formed by the methods of the present disclosure;
FIGS. 11-14 illustrated an alternative method for making a component according to an embodiment of the present disclosure;
FIG. 15 illustrates yet another alternative embodiment of the present disclosure;
FIG. 16 illustrates yet another alternative method for making a component according to the embodiments of the present disclosure;
FIG. 17A is a view along lines 17A-17A of FIG. 16;

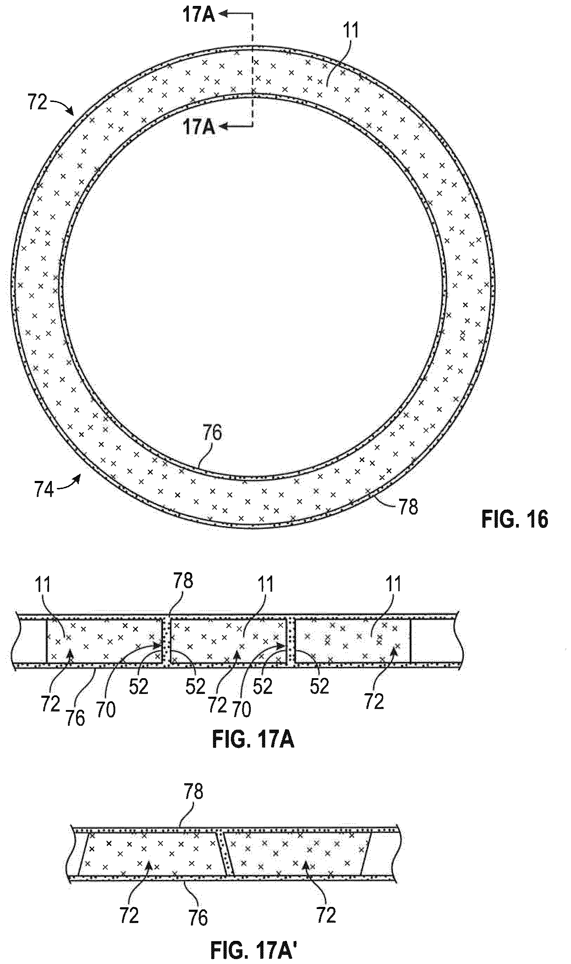

FIG. 17A' is a view along lines 17A-17A of FIG. 16 according to an alternative embodiment of the present disclosure; and

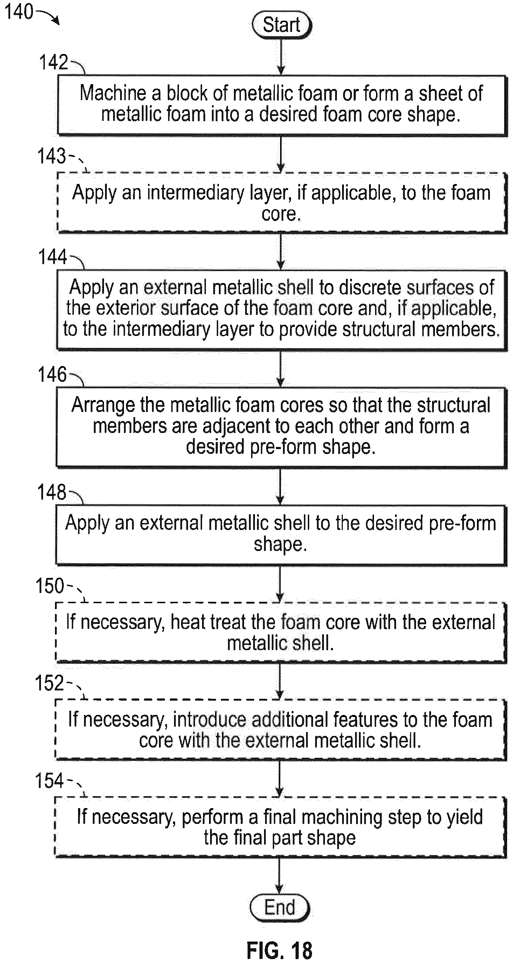

FIG. 18 is a flow chart illustrating a method of making a component according to non-limiting methods of the present disclosure.

### DETAILED DESCRIPTION

Various embodiments of the present disclosure are related to methods of making low cost, light weight components and components formed by the aforementioned methods. In particular, the present application is directed to a component having an internal foam core, which in one embodiment is a metallic foam core, and an external metallic shell surrounding the metallic foam core and methods for making such a component.

The present disclosure is directed to a method of making a component using a combination of subtractive and additive manufacturing processes. In general, the method starts with a metallic foam core using alloy and foam density that is compatible with a specific design application. The metallic foam core is then machined or formed to a shaped pre-form for subsequent manufacturing steps. After the metallic foam core is formed to the desired shape, a metallic skin is applied to the external surface of the metallic foam core creating a light-weight, rigid structure which can have characteristics similar to existing non-metallic foam core or metallic or non-metallic honeycomb components. After the metallic skin is applied a final machining of the component may occur wherein dimensional characteristics and/or features are added to the component.

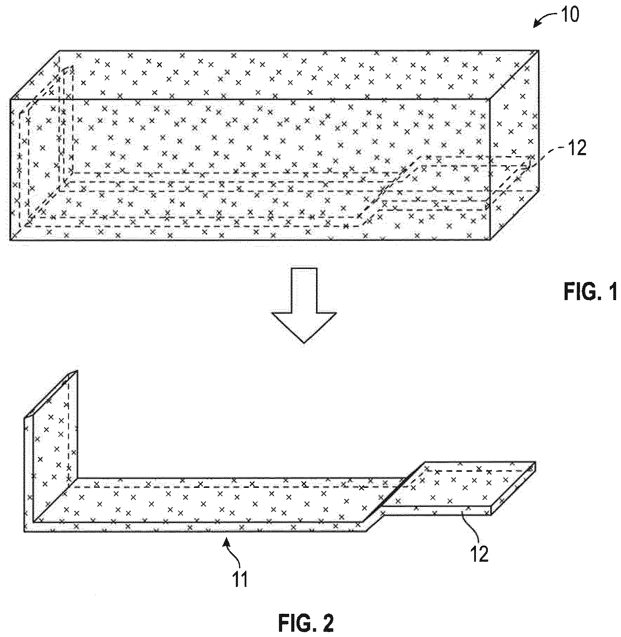

Referring now to FIG. 1, an unformed block of metallic foam 10 is illustrated. The block of metallic foam 10 is formed from the group comprising: titanium (including Ti 6-4, Ti 6-2-4-2, beta phase alloys including Beta 21 s), cobalt, aluminum, nickel (including Inconel 625, Inconel 718), steel alloy, magnesium, copper, molybdenum, niobium, tungsten and zinc alloys as well as intermetallic alloys including titanium aluminide, nickel aluminide and molybdenum disilicide and equivalents thereof. In general, a metallic foam may be referred to as a cellular structure comprising a solid metal with a large volume fraction of pores. These pores may be sealed (closed-cell foam) or interconnected (open-cell foam). In one non-limiting embodiment, the porosity of the foam may be within the range of 5% to 80%. Of course, ranges of porosity greater or less than the aforementioned range are considered to be with the scope of various embodiments of the present disclosure. Selection of the porosity of the metallic foam may be dependent upon the ultimate end use of the component to be formed. For example and in some applications, it may be desirable to have a more porous foam core or a less porous foam core. The metallic foam block 10 is large enough to contain a desired part or component geometry 12 illustrated by the dashed lines 12 in FIG. 1.

In FIG. 2, the block of metallic foam 10 has been machined into a foam core 11 having the desired interim part or interim component geometry 12 via any suitable process. As used herein interim part or interim component geometry may be referred to as being slightly smaller than the final part or component geometry in order to account for the applied external metallic shell 20. In some applications, it may be desirable to form the metallic foam core to near net shape as part of the initial foam manufacturing process. Examples of machining processes include but are not limited to milling, grinding, electrical discharge machining (EDM), water-jet machining, laser machining, combinations thereof or any other process capable of machining the block 10 into the metallic foam core 11 having the component geometry 12.

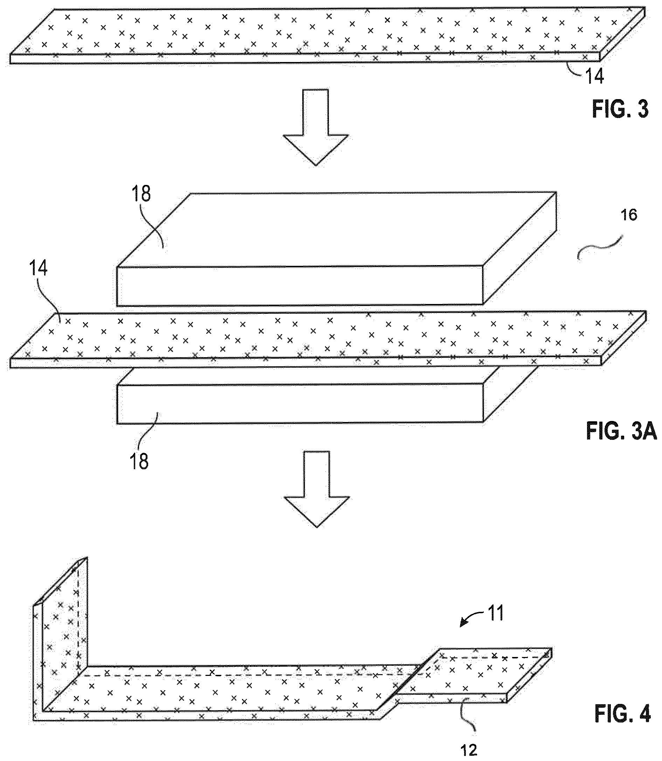

Alternatively and as illustrated in FIGS. 3, 3A and 4, a sheet of metallic foam 14 may be provided. In this alternative process, the sheet of metallic foam 14 is formed into the foam core 11 having the desired part or component geometry 12 via a hot or cold forming process wherein the sheet of metallic foam 14 is placed in a die 16. The die 16 may include a pair of complementary halves 18 configured to form the desired part or component geometry 12. In alternative embodiments, the die 16 may have more than one pair of elements or die halves 18.

The formed component or metallic core 11 is illustrated in FIG. 4. The formed sheet of metallic foam may be further shaped to a final configuration using the aforementioned machining processes such as milling, electrical discharge machining (EDM), water-jet machining, laser machining, combinations thereof or any other process capable of machining the formed sheet of metallic foam.

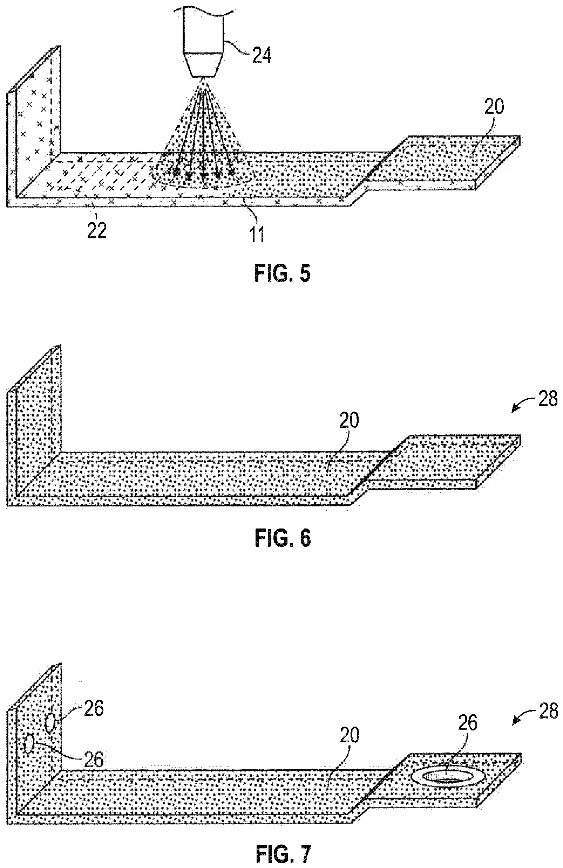

Referring now to at least FIG. 5, the formed metallic foam core 11 from any of the aforementioned processes (machining, forming or combinations thereof) depicted in at least FIGS. 1-4, has an external metallic shell 20 deposited on the exterior surface of the formed metallic foam core 11. In one embodiment, the external metallic shell 20 is deposited about the entire exterior surface of the formed metallic foam core 11. Alternatively, discrete areas of the formed metallic foam core may be masked such that the external metallic shell 20 is prohibited from covering certain areas. The external metallic shell 20 may also be referred to as an outer reinforcing metallic skin 20. Accordingly, the metallic foam pre-form or core 11 is used as a base for application of the external metallic shell 20. Depending on the initial foam cell size and material being deposited as well as the deposition method, it may be permissible to have an interim coat or applique to form a non-porous intermediate layer for metallic deposition. In this embodiment, the interim coat is first applied and then the external metallic shell 20 is applied to the metallic foam pre-form or core 11. In FIG. 5, the interim coat is illustrated by the dashed lines 22. The external metallic shell 20 is a metallic material chemically and metalurgically compatible with that of the metallic foam and the external metallic outer shell 20 is applied via any suitable method comprising: flame spray application; plasma spray application; cold-spray application; electron beam physical vapor deposition (EB/PVD), chemical vapor deposition (CVD), and electroplating application process. The external metallic outer skin can be made of any of the same alloys listed in the core section which includes but is not limited to titanium (including Ti 6-4, Ti 6-2-4-2, beta phase alloys including Beta 21s), cobalt, aluminum, nickel (including Inconel 625, Inconel 718), steel alloy, magnesium, copper, molybdenum, niobium, tungsten and zinc alloys as well as intermetallic alloys including titanium aluminide, nickel aluminide and molybdenum disilicide and equivalents thereof. The material used in the external metallic outer skin may be the same or may be different than that used in the foam core depending on the metallurgical compatibility of the outer skin to the foam core. In addition and in some instances when a different alloys is used for the external skin 20 as opposed to that used for the foam core, one or more intermediate alloys may be used as interim coat or coats 22 covering portions or all of the part to bridge the compatibility of the core alloy 11 and the outermost skin alloy 20.

Other non-metallic materials may be deposited in addition to the metallic coatings, these coatings may include ceramic based thermal barrier coatings.

In FIG. 5, a nozzle 24 is illustrated and in one embodiment, the nozzle 24 may be used in conjunction with a plasma spray application process. Once the external metallic outer shell 20 is applied to the exterior surface of the metallic foam pre-form or core 11, this part, as illustrated in FIG. 6, is inspected for surface coverage and may be further subjected to a heat treating step in order to relieve residuals stresses imparted by manufacturing and outer skin deposition processes and/or to provide desired final material properties. In applications where the foam core is an open cell structure, the outer skin may be perforated with a plurality of venting holes to allow for internal air to escape from the part as it is heated during the heat treating step. In one embodiment, the venting holes may be sealed after the heat treating step and in other embodiments, the venting holes may be subsequently sealed after the heat treating step.

At the next step, additional features 26 are introduced to the coated metallic foam pre-form or core 11 in order to form the desired part or component 28. These additional features may be added by any suitable process such as milling, spot-face drilling, counter-bore drilling, conventional drilling, etc. In FIG. 7, the features 26 are illustrated as openings, of course, any other configurations are considered to be within the scope of various embodiments of the present disclosure. Still further and in the event that the drilling process removes some of the external metallic outer shell 20 and the metallic foam is exposed, a supplemental application process of the external metallic outer shell 20 may be employed to cover the exposed metallic foam. In yet another embodiment, the part 28 may not require any additional features 26 to be added. In one non-limiting embodiment, the component 28 may comprise the formed metallic core 11, an applied external metallic shell 20 and if applicable feature 26 as well as an intermediary layer 22 located between an external surface of the formed metallic core 11 and the applied external metallic shell 20.

Since the external metallic outer shell 20 is applied via a process wherein the localized thickness of the external metallic outer shell 20 may vary with respect to other locations, the thickness of the external metallic outer shell 20 on the exterior of the part may be tailored in thickness, pattern and orientation to provide preferential strength and thus the part or component 28 may have localized structural features such as ribs or gussets, which are provided by the applied external metallic outer shell 20.

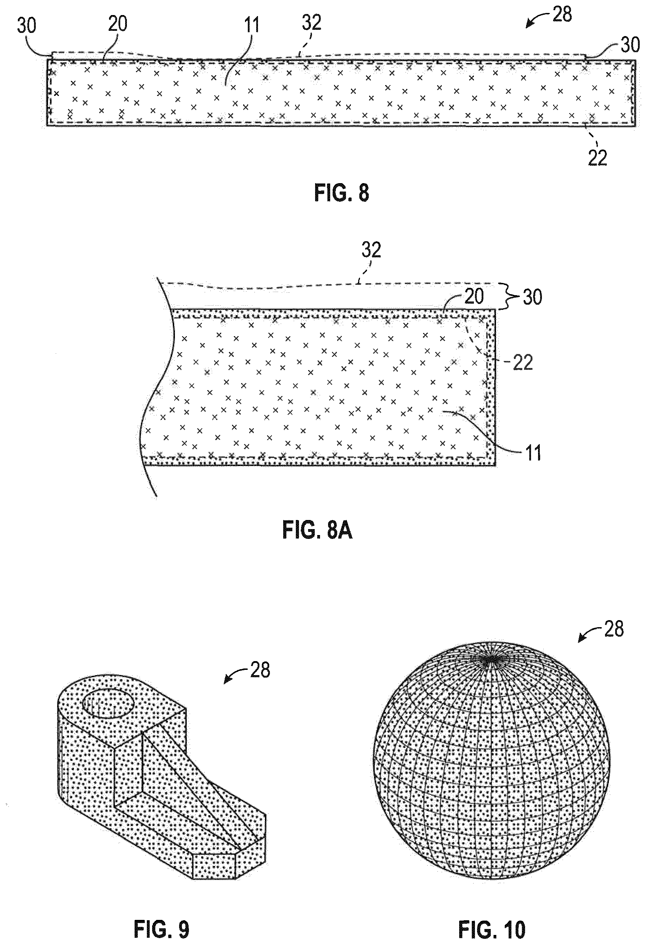

For example and referring at least to the cross-sectional view of FIGS. 8 and 8A, a thickness 30 of the external metallic outer shell 20 may vary. In FIG. 8, the dashed line 32 is provided to illustrate the varying thickness of the external metallic outer shell 20 that surrounds the internal metallic foam core 11. Also shown in FIGS. 8 and 8A is the intermediary layer 22, which may or may not be applied prior to the application of the external metallic outer shell 20.

In yet another implementation and for parts designed to be capable of bending in certain areas over others, the applied metallic skin on the external surface of the formed part in some applications places the load carrying material away from a neutral axis of the part for high structural efficiency.

In accordance with various embodiments of the present disclosure, machining or forming of the metallic foam core 11 can be done very quickly and at lower expense than machining a solid block of material. This will result in a significant reduction in raw material waste vs. machining processes applied to solid blocks of material. In addition, the metallic deposition on the outside of foam core may be tailored in thickness to provide preferential strength.

FIGS. 9 and 10 illustrate non-limiting examples of a part or component 28 formed by the various methods of the present disclosure. Some additional non-limiting examples of contemplated components or parts include brackets, housings, ducts, liner assemblies, (commercial engine tailcones, nozzles, etc). In one non-limiting embodiment, the part or component 28 may be an aviation component. In another embodiment, the component may be used in any application where the component weight and cost are key design constraints.

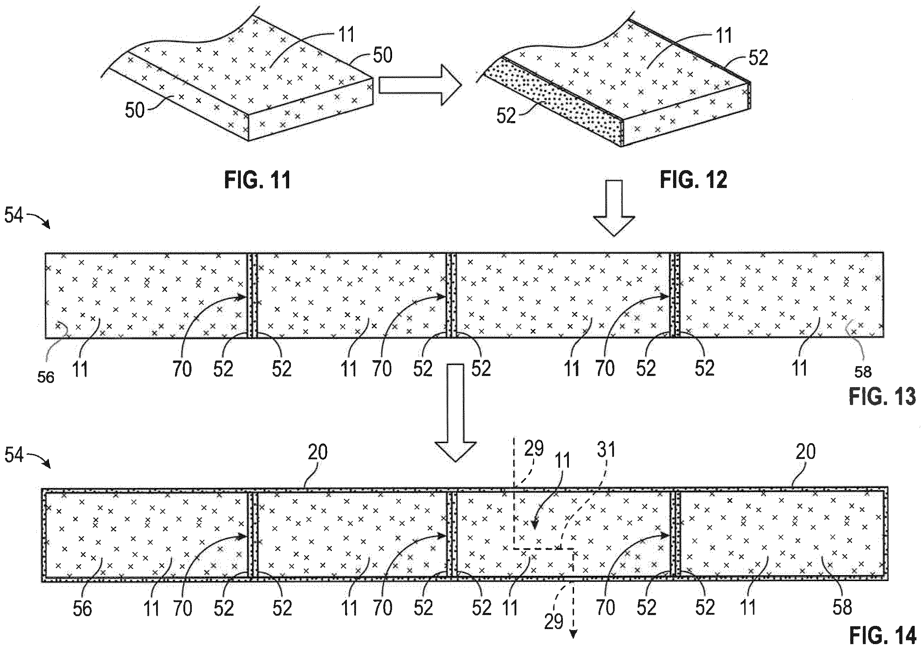

Referring now to FIGS. 11-14, an alternative embodiment of the present disclosure is illustrated. In this embodiment, the metallic foam core or metallic foam core segment 11 has the external metallic outer shell applied to selective exterior segments 50 of the metallic foam core or segment 11. In this embodiment, the selective exterior surface segments 50 of the metallic foam core or segment 11 may be lateral exterior walls of the metallic foam core or segment 11. In this embodiment, the applied external metallic outer shell applied to the exterior surface segments 50 may be referred to as a structural member or members 52, which are formed from anyone of the aforementioned metallic materials used for the external metallic outer shell 20. These structural members 52 may be applied via anyone of the aforementioned application processes discussed above. Once the structural members 52 are applied to the desired surface segments 50, the foam core or segment 11 with its structural members 52 is arranged with a plurality of foam cores or foam core segments 11 each having structural members 52 previously applied thereto. As illustrated in FIG. 13, some of the foam cores or foam core segments 11 have their respective structural members 52 adjacent to each other when they are arranged into a desired pre-form shape 54 illustrated in at least FIGS. 13 and 14. In addition and as illustrated in at least FIGS. 13 and 14, the structural members 52 are located such that they are positioned internally within the desired pre-form shape 54. Accordingly, these structural members 52 are located such that they provide structural support to the desired pre-form shape 54.

Also illustrated in FIG. 13 is that the foam cores or foam core segments 11 located on the ends of the desired pre-form shape 54 only have structural members 52 applied to a surface that will be abutted adjacent to another structural member of another adjacent foam core or foam core segment 11. These cores are identified as cores 56 and 58. Of course and in an alternative embodiment, the exterior walls or surfaces of the cores 56 and 58 may also have a structural member applied thereto. In addition and as the desired shape of the component 28 varies some of the metallic foam core segments may not have any structural member (e.g., metallic shell) applied thereto prior to the application of the external metallic shell 20.

As previously discussed, the metallic foam core 11 may be pre-formed by anyone of the aforementioned machining or forming processes or in this embodiment, the metallic foam core 11 may simply be pre-formed in its desired shape. In other words, the desired shape of the metallic foam core 11 may be a byproduct of the process used to initially make the metallic foam core 11.

Once the desired pre-form shape 54 is defined the outer reinforcing metallic skin 20 is applied to the entire exterior surface of the pre-form shape 54 using the application processes illustrated in at least FIG. 5. Accordingly and in this embodiment, the formed component 28 not only has a metallic outer reinforcing skin 20 but it also has internal reinforcing metallic ribs 70 formed by the structural members 52. In addition and as mentioned in the previous embodiments, an interim coat or applique may be applied to form a non-porous intermediate layer for the metallic deposition. Still further and as mentioned above, features 26 may be formed in the part or component 28 and if applicable an additional step of metallic deposition may occur after the formation of features 26.

In yet another alternative embodiment and as illustrated by the dashed lines in FIG. 14, features 26 may be openings 29 formed in opposite sides of the metallic outer reinforcing skin 20 of a particular foam core segment 11 and the internal reinforcing ribs 70 may act as barriers and thus a fluid path 31 through the open cell configuration of the foam core segment is provided.

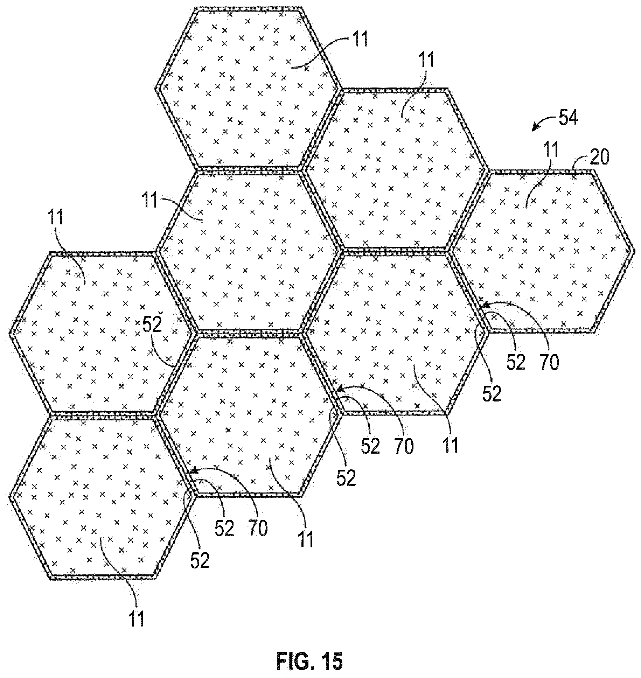

Referring now to FIG. 15, yet another alternative embodiment of the present disclosure is illustrated. Here each of the metallic foam cores 11 are configured as discrete cells wherein the internally facing lateral walls are each provided with structural members 52 as discussed above. Accordingly, a plurality of internal reinforcing metallic ribs 70 are formed by pairs of structural members 52 being adjacent to each other. Alternatively, only one of the cores may be configured with the structural member 52 and thus, the rib or ribs 70 may be formed from a single structural member 52. In this embodiment, each of the metallic foam cores 11 are configured to have a hexagon shape. Of course, numerous other shapes are considered to be within the scope of various embodiments of the present disclosure.

Referring now to FIGS. 16, 17A and 17A', yet another alternative embodiment of the present disclosure is illustrated. Here each of the metallic foam cores 11 are configured as pre-formed metallic foam ring segments 72 wherein the internally facing lateral walls of the ring segments 72 are each provided with structural members 52 as discussed above. Accordingly, a plurality of internal reinforcing metallic ribs 70 formed by pairs of structural members 52 arranged to be adjacent to each other. In this embodiment, the plurality of ring segments 72 are secured to each other to form an axisymmetric duct 74 and the applied outer reinforcing skin provides an inner outer metallic skin 76 and an outer metallic skin 78.

Referring to the view of FIG. 17A, the pre-formed metallic foam ring segments 72 are illustrated along with the internal reinforcing metallic ribs 70 formed by the structural members 52. Referring to the view of FIG. 17A', an alternative embodiment, is illustrated. In this embodiment, the pre-formed metallic foam ring segments 72 have angularly configured exterior surfaces such that the internally reinforcing metallic ribs 70 formed by the structural members 52 are angularly arranged with respect to the inner outer metallic skin 76 and the outer metallic skin 78 as opposed to the perpendicular arrangement illustrated in FIG. 17A. Of course, numerous other angular configurations are contemplated to be within the scope of various embodiments of the present disclosure.

Referring now to FIG. 18, a flow chart 140 illustrating a method for forming a part or component 28 in accordance with various embodiments of the present disclosure is illustrated. At a first step 142, an unformed block of metallic foam 10 is machined to a foam core 11. As mentioned above non-limiting machining processes include milling, electrical discharge machining (EDM), water-jet machining, laser machining, combinations thereof or any other process capable of machining the block 10 into the metallic foam core 11 having desired geometry. Alternatively and at the first step 142, a sheet of metallic foam 14 may be provided and the sheet of metallic foam 14 is formed into the foam core 11 having the desired part or component geometry via a hot or cold forming process wherein the sheet of metallic foam 14 is placed into a die 16. The die 16 may include a pair of complementary halves 18 configured to form the desired part or component geometry 12. The formed sheet of metallic foam may be further shaped to a final configuration using the aforementioned machining processes.

Thereafter and at step 144, the formed component or metallic core 11 from any of the aforementioned processes (machining, forming or combinations thereof) has structural members 52 applied to surface segments 50 of the foam core or segment 11.

Thereafter and at step 146, the metallic core 11 with its structural members 52 is arranged with a plurality of cores 11 such that the structural members 52 are adjacent to each other and a desired pre-form shape 54 is provided.

Thereafter and at step 148, the external metallic shell 20 is deposited on the exterior surface of the pre-formed shape 54. As a precursor to steps 144 and 148, an interim coat or applique may be applied to the foam core 11 prior to the application of the structural members 52 and the external metallic shell 20. This is illustrated as alternative step 143, which is illustrated in dashed lines. As mentioned above, the structural members 52 and the external metallic outer shell 20 are applied via any one of the aforementioned processes comprising: flame spray application; plasma spray application; cold-spray application; electron beam physical vapor deposition, (EB/PVD), chemical vapor deposition (CVD), and electroplating application process.

Once the external metallic outer shell 20 is applied to the exterior surface of the pre-formed shape 54, this part, may be further subjected to a heat treating step 150, which is illustrated in dashed lines as this step may not be required in all processes.

At step 152, additional features, if required, are introduced to the coated metallic foam pre-formed shape 54 in order to form the desired part or component 28. These additional features may be added by any suitable process such as milling, spot-face drilling, counter-bore drilling, conventional drilling, etc. Still further and in the event that the drilling process removes some of the external metallic outer shell 20 and the metallic foam is exposed, a supplemental application process of the external metallic outer shell 20 may be employed to cover the exposed metallic foam. In yet another embodiment, the part 28 may not require any additional features 26 to be added. In addition and as illustrated by the dashed lines in FIG. 18, an alternative step 154 may be provided wherein a final machining step of any key attachment, interface or functionally critical surfaces of the part or component occurs after step 152. This would yield the final part shape.

As discussed herein various methods for producing lightweight, low cost components and/or parts are provided. Still further components and/or parts formed by the various methods are also provided.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements within the scope of the appended claims. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of making a light weight component (28), comprising:
forming a first metallic foam core (11) into a desired configuration smaller than the final dimensions of the light weight component either from a block of open or closed cell structured metallic foam by a machining process selected from the group comprising: milling; grinding; electrical discharge machining (EDM); water-jet; and laser machining, or from a sheet of open or closed cell structured metallic foam by a hot or cold forming process wherein the metallic foam is placed in a die;
forming a second metallic foam core (11) into a desired configuration smaller than the final dimensions of the light weight component either from a block of open or closed cell structured metallic foam by a machining process selected from the group comprising: milling; grinding; electrical discharge machining (EDM); water-jet; and laser machining, or from a sheet of open or closed cell structured metallic foam by a hot or cold forming process wherein the metallic foam is placed in a die;
applying an external metallic shell (20) to an exterior surface (50) of the first metallic foam core (11) after it has been formed into the desired configuration to form a first structural member (52) via an application process selected from the group comprising: flame spray application process; plasma spray application process; cold-spray application process; electron beam physical vapor deposition (EB/PVD); chemical vapor deposition; and electroplating application process;
applying an external metallic shell (20) to an exterior surface (50) of the second metallic foam core (11) after it has been formed into the desired configuration to form a second structural member (52) via an application process selected from the group comprising: flame spray application process; plasma spray application process; cold-spray application process; electron beam physical vapor deposition (EB/PVD); chemical vapor deposition; and electroplating application process;
arranging the first structural member to be adjacent to the second structural member to form a desired pre-form shape, wherein the applied external metallic shell (20) located on the surface (50) of the second metallic foam core of the second structural member (52), is adjacent to the external metallic shell applied to the exterior surface of the first metallic foam core of the first structural member (52) such that a metallic rib (70) is formed by the metallic shells of the first structural member (52) and the second structural member (52); and
applying an external metallic shell (20) to an exterior surface of the desired pre-form shape (54) via an application process selected from the group comprising: flame spray application process; plasma spray application process; cold-spray application process; electron beam physical vapor deposition (EB/PVD); chemical vapor deposition; and electroplating application process,
wherein the metal of the metallic foam core is selected from the group comprising: titanium; colbalt; aluminum; nickel; steel alloys, magnesium, copper, molybdenum, niobium, tungsten, zinc alloys, titanium aluminide, nickel aluminide and molybdenum disilicide.

2. The method as in claim 1, wherein the desired configuration is a hexagon, or wherein the desired configuration is a ring.

3. The method as in any preceding claim, wherein the metallic foam core (11) is an open cell structure and the applied external metallic shell (20) defines a portion of a fluid conduit through the component.

4. The method as in any preceding claim, wherein an inlet opening and an outlet opening are formed in the external metallic shell (20) and the metallic foam core (11) is an open cell structure and the applied external metallic shell defines a portion of a fluid conduit through the component (28) via the inlet opening and the outlet opening.

5. The method as in any preceding claim, wherein an interim coat (22) is deposited on the exterior surface of the metallic foam core (11) prior to the application of the external metallic shell (20).

6. The method as in claim 5, wherein the interim coat is a ceramic based thermal barrier coating.

7. The method as in any preceding claim, further comprising the step of: heat treating the metallic foam core (11) after the external metallic shell (20) has been applied to the exterior surface of the metallic foam core.

8. The method as in any preceding claim, further comprising the step of: forming additional features (26) in the metallic foam core (11) after the external metallic shell (20) has been applied to the exterior surface of the metallic foam core.

9. The method as in claim 8, wherein the additional features are formed by a drilling process.

10. The method as in claim 9, wherein a supplemental application of the external metallic outer shell is applied to the metallic foam core after the drilling process.

11. The method as in any preceding claim, wherein a thickness (30) of the external metallic outer shell (20) varies (32) in order to provide localized structural rigidity to the component (28).

## Patentansprüche

1. Verfahren zur Herstellung einer leichten Komponente (28), umfassend:
Formen eines ersten Metallschaumkerns (11) zu einer gewünschten Konfiguration, die kleiner ist als die Endabmessungen der leichten Komponente, entweder aus einem Block aus Metallschaum mit einer offenen oder geschlossenen Zellstruktur durch einen Bearbeitungsprozess, ausgewählt aus der Gruppe, umfassend: Fräsen; Schleifen; Funkenerodieren (EDM); Wasserstrahl; und Laserbearbeitung, oder aus einer Schicht aus Metallschaum mit einer offenen oder geschlossenen Zellstruktur durch einen Warm- oder Kaltumformungsprozess, wobei der Metallschaum in einer Form platziert wird;
Formen eines zweiten Metallschaumkerns (11) zu einer gewünschten Konfiguration, die kleiner ist als die Endabmessungen der leichten Komponente, entweder aus einem Block aus Metallschaum mit einer offenen oder geschlossenen Zellstruktur durch einen Bearbeitungsprozess, ausgewählt aus der Gruppe, umfassend: Fräsen; Schleifen; Funkenerodieren (EDM); Wasserstrahl; und Laserbearbeitung, oder aus einer Schicht aus Metallschaum mit einer offenen oder geschlossenen Zellstruktur durch einen Warm- oder Kaltumformungsprozess, wobei der Metallschaum in einer Form platziert wird;
Anbringen einer äußeren Metallhülle (20) an einer Außenfläche (50) des ersten Metallschaumkerns (11), nachdem er zu der gewünschten Konfiguration geformt wurde, um ein erstes Strukturelement (52) über einen Anbringungsprozess zu formen, der aus der Gruppe ausgewählt ist, umfassend: Flammspritzanbringungsprozess; Plasmaspritzanbringungsprozess; Kaltspritzanbringungsprozess; Elektronenstrahlverdampfung (EB/PVD); chemische Gasphasenabscheidung; und einen galvanisierenden Anbringungsprozess;
Anbringen einer äußeren Metallhülle (20) an einer Außenfläche (50) des zweiten Metallschaumkerns (11), nachdem er zu der gewünschten Konfiguration geformt wurde, um ein zweites Strukturelement (52) über einen Anbringungsprozess zu formen, der aus der Gruppe ausgewählt ist, umfassend: Flammspritzanbringungsprozess; Plasmaspritzanbringungsprozess; Kaltspritzanbringungsprozess; Elektronenstrahlverdampfung (EB/PVD); chemische Gasphasenabscheidung; und einen galvanisierenden Anbringungsprozess;
Anordnen des ersten Strukturelements, sodass es sich neben dem zweiten Strukturelement befindet, um eine gewünschte Vorformlingsform zu formen, wobei die angebrachte äußere Metallhülle (20), die sich an der Fläche (50) des zweiten Metallschaumkerns des zweiten Strukturelements (52) befindet, an die äußere Metallhülle angrenzt, die an der Außenfläche des ersten Metallschaumkerns des ersten Strukturelements (52) angebracht wird, sodass eine Metallrippe (70) von den Metallhüllen des ersten Strukturelements (52) und des zweiten Strukturelements (52) geformt wird; und
Anbringen einer äußeren Metallhülle (20) an einer Außenfläche der gewünschten Vorformlingsform (54) über einen Anbringungsprozess, ausgewählt aus der Gruppe, umfassend: Flammspritzanbringungsprozess; Plasmaspritzanbringungsprozess; Kaltspritzanbringungsprozess; Elektronenstrahlverdampfung (EB/PVD); chemische Gasphasenabscheidung; und einen galvanisierenden Anbringungsprozess,
wobei das Metall des Metallschaumkerns aus der Gruppe ausgewählt ist, umfassend: Titan; Cobalt; Aluminium; Nickel; Stahllegierungen, Magnesium, Kupfer, Molybdän, Niob, Wolfram, Zinklegierungen, Titanaluminid, Nickelaluminid und Molybdändisilizid.

2. Verfahren nach Anspruch 1, wobei die gewünschte Konfiguration ein Sechseck ist, oder wobei die gewünschte Konfiguration ein Ring ist.

3. Verfahren nach einem der vorhergehenden Ansprüche, wobei der Metallschaumkern (11) einer offenen Zellstruktur entspricht und die angebrachte äußere Metallhülle (20) einen Teil einer Fluidleitung durch die Komponente definiert.

4. Verfahren nach einem der vorhergehenden Ansprüche, wobei eine Einlassöffnung und eine Auslassöffnung in der äußeren Metallhülle (20) geformt werden und der Metallschaumkern (11) einer offenen Zellstruktur entspricht und die angebrachte äußere Metallhülle einen Teil einer Fluidleitung durch die Komponente (28) über die Einlassöffnung und die Auslassöffnung definiert.

5. Verfahren nach einem der vorhergehenden Ansprüche, wobei eine Zwischenbeschichtung (22) vor dem Anbringen der äußeren Metallhülle (20) auf der Außenfläche des Metallschaumkerns (11) abgeschieden wird.

6. Verfahren nach Anspruch 5, wobei die Zwischenbeschichtung eine Wärmedämmschicht auf Keramikbasis ist.

7. Verfahren nach einem der vorhergehenden Ansprüche, ferner umfassend den folgenden Schritt: Wärmebehandeln des Metallschaumkerns (11), nachdem die äußere Metallhülle (20) an der Außenfläche des Metallschaumkerns angebracht wurde.

8. Verfahren nach einem der vorhergehenden Ansprüche, ferner umfassend den folgenden Schritt: Formen zusätzlicher Merkmale (26) in dem Metallschaumkern (11), nachdem die äußere Metallhülle (20) an der Außenfläche des Metallschaumkerns angebracht wurde.

9. Verfahren nach Anspruch 8, wobei die zusätzlichen Merkmale durch einen Bohrprozess geformt werden.

10. Verfahren nach Anspruch 9, wobei eine zusätzliche Anbringung der äußeren Metallaußenhülle nach dem Bohrprozess an dem Metallschaumkern angebracht wird.

11. Verfahren nach einem der vorhergehenden Ansprüche, wobei eine Dicke (30) der äußeren Metallaußenhülle (20) variiert (32), um eine lokalisierte Struktursteifigkeit für die Komponente (28) bereitzustellen.

## Revendications

1. Procédé de fabrication d'un composant de poids léger (28), comprenant :
la formation d'un premier noyau en mousse métallique (11) dans une configuration souhaitée plus petite que les dimensions finales du composant de poids léger à partir d'un bloc de mousse métallique structurée à cellules ouvertes ou fermées par un processus d'usinage choisi dans le groupe comprenant : le fraisage ; le broyage ; l'usinage par décharge électrique (EDM) ; le jet d'eau ; et l'usinage au laser, ou à partir d'une feuille de mousse métallique structurée à cellules ouvertes ou fermées par un processus de formage à chaud ou à froid dans lequel la mousse métallique est placée dans une matrice ;
la formation d'un second noyau en mousse métallique (11) dans une configuration souhaitée plus petite que les dimensions finales du composant de poids léger à partir d'un bloc de mousse métallique structurée à cellules ouvertes ou fermées par un processus d'usinage choisi dans le groupe comprenant : le fraisage ; le broyage ; l'usinage par décharge électrique (EDM) ; le jet d'eau ; et l'usinage au laser, ou à partir d'une feuille de mousse métallique structurée à cellules ouvertes ou fermées par un processus de formage à chaud ou à froid dans lequel la mousse métallique est placée dans une matrice ;
l'application d'une coque métallique externe (20) sur une surface extérieure (50) du premier noyau en mousse métallique (11) après qu'il a été formé dans la configuration souhaitée pour former un premier élément structurel (52) par l'intermédiaire d'un processus d'application choisi dans le groupe comprenant : un processus d'application par pulvérisation à la flamme ; un processus d'application par pulvérisation au plasma ; un processus d'application par pulvérisation à froid ; un dépôt physique en phase vapeur par faisceau d'électrons (EB/PVD) ; un dépôt chimique en phase vapeur ; et un processus d'application de galvanoplastie ;
l'application d'une coque métallique externe (20) sur une surface extérieure (50) du second noyau en mousse métallique (11) après qu'il a été formé dans la configuration souhaitée pour former un second élément structurel (52) par l'intermédiaire d'un processus d'application choisi dans le groupe comprenant : un processus d'application par pulvérisation à la flamme ; un processus d'application par pulvérisation au plasma ; un processus d'application par pulvérisation à froid ; un dépôt physique en phase vapeur par faisceau d'électrons (EB/PVD) ; un dépôt chimique en phase vapeur ; et un processus d'application de galvanoplastie ;
l'agencement du premier élément structurel pour qu'il soit adjacent au second élément structurel pour former une forme de préforme souhaitée, dans lequel la coque métallique externe appliquée (20) située sur la surface (50) du second noyau en mousse métallique du second élément structurel (52) est adjacente à la coque métallique externe appliquée à la surface extérieure du premier noyau en mousse métallique du premier élément structurel (52) de sorte qu'une nervure métallique (70) est formée par les coques métalliques du premier élément structurel (52) et du second élément structurel (52) ; et
l'application d'une coque métallique externe (20) sur une surface extérieure de la forme de préforme souhaitée (54) par l'intermédiaire d'un processus d'application choisi dans le groupe comprenant : un processus d'application par pulvérisation à la flamme ; un processus d'application par pulvérisation au plasma ; processus d'application par pulvérisation à froid ; un dépôt physique en phase vapeur par faisceau d'électrons (EB/PVD) ; un dépôt chimique en phase vapeur ; et un processus d'application de galvanoplastie,
dans lequel le métal du noyau en mousse métallique est choisi dans le groupe comprenant : le titane ; le cobalt ; l'aluminium ; le nickel ; des alliages d'acier, le magnésium, le cuivre, le molybdène, le niobium, le tungstène, des alliages de zinc, l'aluminure de titane, l'aluminure de nickel et le disiliciure de molybdène.

2. Procédé selon la revendication 1, dans lequel la configuration souhaitée est un hexagone, ou dans lequel la configuration souhaitée est un anneau.

3. Procédé selon une quelconque revendication précédente, dans lequel le noyau en mousse métallique (11) est une structure à cellules ouvertes et la coque métallique externe appliquée (20) définit une partie d'un conduit de fluide à travers le composant.

4. Procédé selon une quelconque revendication précédente, dans lequel une ouverture d'entrée et une ouverture de sortie sont formées dans la coque métallique externe (20) et le noyau en mousse métallique (11) est une structure à cellules ouvertes et la coque métallique externe appliquée définit une partie d'un conduit de fluide à travers le composant (28) par l'intermédiaire de l'ouverture d'entrée et de l'ouverture de sortie.

5. Procédé selon une quelconque revendication précédente, dans lequel une couche intermédiaire (22) est déposée sur la surface extérieure du noyau en mousse métallique (11) avant l'application de la coque métallique externe (20).

6. Procédé selon la revendication 5, dans lequel le revêtement intermédiaire est un revêtement de barrière thermique à base de céramique.

7. Procédé selon une quelconque revendication précédente, comprenant en outre l'étape : de traitement thermique du noyau en mousse métallique (11) après que la coque métallique externe (20) a été appliquée sur la surface extérieure du noyau en mousse métallique.

8. Procédé selon une quelconque revendication précédente, comprenant en outre l'étape : de formation d'éléments supplémentaires (26) dans le noyau en mousse métallique (11) après que la coque métallique externe (20) a été appliquée sur la surface extérieure du noyau en mousse métallique.

9. Procédé selon la revendication 8, dans lequel les caractéristiques supplémentaires sont formées par un processus de forage.

10. Procédé selon la revendication 9, dans lequel une application supplémentaire de la coque externe métallique externe est appliquée sur le noyau en mousse métallique après le processus de forage.

11. Procédé selon une quelconque revendication précédente, dans lequel une épaisseur (30) de la coque externe métallique externe (20) varie (32) afin de fournir une rigidité structurelle localisée au composant (28).
